**Europäisches Patentamt**

(19) **European Patent Office**

**Office européen des brevets**

(11) Veröffentlichungsnummer: **0 063 646**
**B1**

(12) **EUROPÄISCHE PATENTSCHRIFT**

(45) Veröffentlichungstag der Patentschrift:
**24.09.86**

(21) Anmeldenummer: **81110485.0**

(22) Anmeldetag: **16.12.81**

(51) Int. Cl.⁴: **G 11 B 27/10,** G 11 B 27/34

(54) Verfahren und Vorrichtung zur Ermittlung und Anzeige der abgelaufenen Spielzeit bzw. Bandlänge und/oder der Restlaufzeit von Kassetten oder Spulen bandförmiger Informationsträger.

(30) Priorität: **24.04.81 DE 3116360**

(43) Veröffentlichungstag der Anmeldung:
**03.11.82 Patentblatt 82/44**

(45) Bekanntmachung des Hinweises auf die Patenterteilung:
**24.09.86 Patentblatt 86/39**

(84) Benannte Vertragsstaaten:
**AT CH DE FR GB LI**

(56) Entgegenhaltungen:
**DE-A-2 730 134**
**DE-A-2 746 613**
**DE-A-2 754 368**
**DE-A-2 918 544**
**DE-B-2 648 396**
**DE-B-2 650 665**

(73) Patentinhaber: **GRUNDIG E.M.V. Elektro-
Mechanische Versuchsanstalt Max Grundig
holländ. Stiftung & Co. KG., Kurgartenstrasse
37, D-8510 Fürth (DE)**

(72) Erfinder: **Schuelein, Reinhard, Dipl.- Ing.,
Humboldtstrasse 6, D-8502 Zirndorf (DE)**

## Beschreibung

Die Erfindung bezieht sich auf ein Verfahren zur Ermittlung und Anzeige der abgelaufenen Spielzeit bzw. Bandlänge und/oder der Restlaufzeit von Kassetten oder Spulen bandförmiger Informationsträger gemäß dem Oberbegriff des Patentanspruchs 1.

Aus der DE-PS 26 50 665 ist bereits ein Verfahren zur Ermittlung der abgelaufenen Spielzeit bzw. Bandlänge und/oder der Restlaufzeit von Kassetten oder Spulen bandförmiger Informationsträger bekannt, bei dem jedoch die Ermittlung der Werte während eines kurzen Testlaufs mit vorgegebener Geschwindigkeit erfolgt und das darüber hinaus - wie auch die in dieser Patentschrift beschriebene Vorrichtung - nur zur Ermittlung bzw. Anzeige der Werte vorgesehen ist.

Ein Verfahren der eingangs genannten Art ist aus der DE-OS 27 30 134 bekannt, bei dem die Genauigkeit der ermittelten Werte bzw. der Anzeige abhängig von der Auflösung der Tachogeneratoren ist. Die damit erzielbare Genauigkeit reicht im allgemeinen für Audiomagnetbandgeräte aus, wie sie dieser Offenlegungsschrift zugrundeliegen. Die spezifischen Daten der Spule bzw. Kassette werden in der DE-OS 27 30 134 nach manueller Betätigung entsprechender Tasten aus einem Speicher abgerufen, wie auch der die Bandposition bestimmende Meßlauf nach Betätigen einer Funktionstaste erfolgt. Die Maßnahmen der DE-OS 27 30 134 sind jedoch nicht geeignet, den hohen Genauigkeitsanforderungen in Videomagnetbandgeräten gerecht zu werden. Darüber hinaus ist dort ein großer Hardware-Aufwand gegeben.

Der Erfindung liegt daher die Aufgabe zugrunde, ein Verfahren der im Oberbegriff des Patentanspruchs 1 angegebenen Art derart weiterzubilden, daß die Anzeige der vom Bandanfang abgelaufenen Spielzeit bzw. Bandlänge und/oder Restlaufzeit mit der für Videomagnetbandgeräte nötigen hohen Genauigkeit bei bauteilearmem Aufbau unter Ausführung zusätzlicher Regelfunktionen ermöglicht wird.

Diese Aufgabe wird durch die im kennzeichnenden Teil des Patentanspruchs 1 angegebenen Maßnahmen gelöst.

Eine vorteilhafte Weiterbildung der Maßnahmen des Anspruchs 1 ergibt sich aus dem Unteranspruch.

Mit dem erfindungsgemäßen Verfahren wird eine Spielzeit- bzw. Bandlängenanzeige (Bandzähler) mit sehr genauer, z. B. minutengenauer, Anzeige der vom Bandanfang abgelaufenen Spielzeit bzw. Bandlänge erreicht. Da die verwendete Recheneinheit auch die Wickelmotoren (beim Umspulen) regelt und die Einstellung der Bandzüge bei Wiedergabe übernimmt, läßt sich ein einfacher und damit kostensparender Aufbau bei der Verwendung in einer Vorrichtung zur Durchführung des erfindungsgemäßen Verfahrens, beispielsweise in einem Videorecorder, erzielen. Als sehr vorteilhaft erweisen sich auch der erfindungsgemäße Meßlauf und die Berechnung der (Bandzähler-)Werte unabhängig von der Bandgeschwindigkeit sowie die Bandzugsteuerung und die Umspulregelung. Mit anderen Worten, als wesentlich erweist sich die aus den Tachofrequenzen zu gewinnende Regelinformation für Umspulen und Bandzüge und der damit verbundene geringe Schaltungsaufwand.

Die Erfindung wird im folgenden unter Bezugnahme auf die Zeichnungsfiguren beispielsweise näher erläutert.

Es zeigen:

Fig. 1 Eine Prinzipschaltung zur Erläuterung des erfindungsgemäßen Verfahrens und

Fig. 2 ein Diagramm, das die Spielzeit als Funktion der Drehzahlenverhältnisse darstellt.

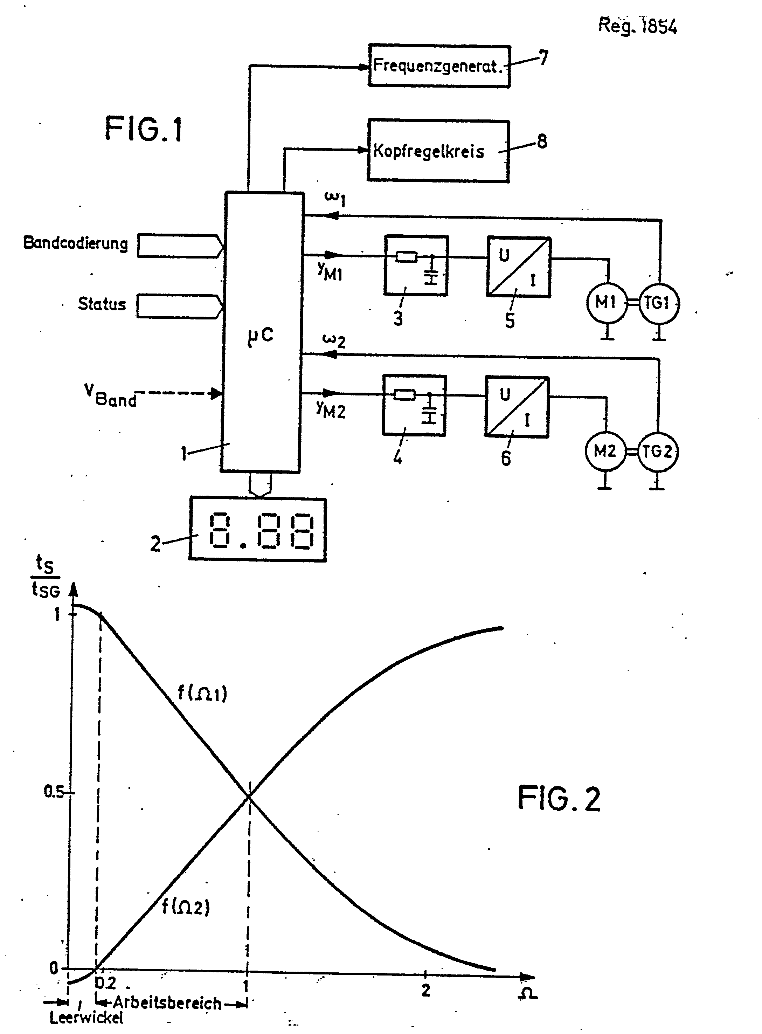

Gemäß Fig. 1, die eine Prinzipschaltung zur Erläuterung des erfindungsgemäßen Verfahrens darstellt, werden spezifische Daten (Gesamtspieldauer, Bandkonstante $K_B$, Motorregelkonstanten $C_1$, $C_2$, $b_1$, $b_2$), d.h. die Bandkodierung der (nicht dargestellten) Spule bzw. Kassette durch eine externe Abtastvorrichtung abgerufen und in einer Recheneinheit 1, z.B. einem Mikrocomputer, verarbeitet sowie die jeweilige Funktion (Wiedergabe/Umspulen) in geeigneter Form über Datentransfer oder beispielsweise direkt von einer Tastatur eingegeben. Die Recheneinheit 1 ist mit einer Anzeigeeinheit 2 (Display) verbunden. Dabei kann die Recheneinheit 1 nicht nur mit einer direkt gekoppelten Anzeigeeinheit 2, sondern auch mit einer bereits im Gerät vorhandenen Anzeigeeinheit verbunden sein. Die mit dem jeweiligen Antriebsmotor M1 bzw. M2 der Bandwickelteller verbundenen Tachogeneratoren TG1 bzw. TG2 führen der Recheneinheit 1 die jeweilige Drehzahl $n_1$; $n_2$ bzw. Tachofrequenz $\omega_1$; $\omega_2$ der Aufwickel- oder Vorratsspule zu. Die Recheneinheit 1 ihrerseits gibt an die Motoren M1 bzw. M2 Signale, vorzugsweise pulsdauermodulierte Signale, $y_{M1}$ bzw. $y_{M2}$ über Integratoren 3 bzw. 4 und damit verbundene Spannungs-/Strom-Umsetzer 5 bzw. 6 zur Ansteuerung der Motoren ab. Sofern entsprechend preisgünstige Digital/Analog-Wandler zur Verfügung stehen, können diese anstelle der Integratoren 3 bzw. 4 verwendet werden.

Insbesondere in Verbindung mit einem Videomagnetbandgerät wird gemäß Fig. 1 von der Recheneinheit 1 ein Steuersignal (Führungsgröße) an den Kopfradregelkreis 8 des Videogerätes zur Nachregelung der Kopfradfrequenz und Kopfradphase bei abweichender Spielgeschwindigkeit abgegeben. Bei abweichender Spielgeschwindigkeit wird darüber hinaus ein Signal an den Frequenzgenerator 7 des Videogerätes von der Recheneinheit 1 abgegeben, um die Spurkennfrequenzen entsprechend umzuschalten. Der Recheneinheit 1 kann aber neben den genannten spezifischen Daten über die Bandcodierung bzw. die jeweilige Funktion auch der - gegebenenfalls anderweitig gemessene - Wert der Bandgeschwindigkeit $v_{Band}$ zugeführt werden, wie dies in Fig. 1 mit dem gestrichelten Pfeil dargestellt ist. Die geschilderte externe Zuführung der Werte der Bandgeschwindigkeit $v_{Band}$ an die Recheneinheit 1 kann zum Beispiel zur Verfeinerung der Anzeige verwendet werden, falls die Tachoauflösung dafür zu grob ist. Dies ist insbesondere in Verbindung mit der Ansteuerung des Frequenzgenerators 3 und des Kopfradregelkreises 8 vorteilhaft, wenn eine extrem genaue Anzeige (z.B. im Promille-Bereich) erhalten werden soll.

Die Funktion wird im folgenden in Verbindung mit einem (nicht dargestellten) Videogerät mit Bandkassette näher erläutert:

Nach Einlegen der Kassette tastet die Recheneinheit 1 über Kontakte die Kassettencodierung ab. Einer Festwert-Tabelle entnimmt die Recheneinheit 1 dann die für die Berechnung der Anzeigewerte (Gesamtspielzeit/Bandkonstante $K_B$/Kanstanten $C_1$, $C_2$, $b_1$, $b_2$) nötigen Werte für Gesamtspielzeit $t_{SG}$ und Bandkonstante $K_B$. Durch einen kurzen Meßlauf der Tachofrequenzen $\omega_1$ und $\omega_2$ errechnet die Recheneinheit 1 die Bandstelle und zeigt diese in entsprechender Form auf der Anzeigeeinheit 2 an. Dabei erfolgt die Berechnung der anzuzeigenden Werte nach der folgenden mathematischen Beziehung:

$$\frac{t_S}{t_{SG}} = \frac{1 + K_B(1 - \Omega^2)}{1 + \Omega^2} \quad , \quad (1)$$

wobei

$$\Omega = \frac{\omega_1}{\omega_2} = \frac{f_1}{f_2} = \frac{n_1}{n_2}$$

das Verhältnis der Drehzahlen der Bandwickelteller bzw. der Tachofrequenzen, $t_S$ die Spielzeit, $t_{SG}$ die Gesamtspielzeit und $K_B$ die Bandkonstante ist, die sich gemäß folgender mathematischer Beziehung ergibt:

$$K_B = \frac{\pi \cdot d_0^2}{4 \cdot d_B \cdot l_B} \quad (2)$$

worin $d_0$ den Durchmesser des Leerwickels, $d_B$ die Banddicke und $l_B$ die Bandlänge bedeutet.

Nutzt man den annähernd linearen Teil, d.h. den "Arbeitsbereich", der Funktion $t_S = f(\Omega)$ aus, so ist eine Unterscheidung des Tachoquotienten nötig. Es gilt für

$$\omega_1 < \omega_2 \qquad \frac{t_S}{t_{SG}} = \frac{1 + K_B(1 - \Omega_1^2)}{1 + \Omega_1^2} \quad , \quad (3)$$

wobei $\Omega_1 = \frac{\omega_1}{\omega_2}$ ist, und für

$$\omega_1 > \omega_2 \qquad \frac{t_S}{t_{SG}} = 1 - \frac{1 + K_B(1 - \Omega_2^2)}{1 + \Omega_2^2} \quad , \quad (4)$$

wobei $\Omega_2 = \frac{\omega_2}{\omega_1}$ ist.

Diese Zusammenhänge sind im Kurvendiagramm gemäß Fig. 2 näher dargestellt. In Fig. 2 sind auf der Ordinate Werte von 0 bis 1 für das Verhältnis $t_S : t_{SG}$ und auf der Abszisse Werte für $\Omega$, d.h. das Verhältnis der Drehzahlen der Bandwickelteller aufgetragen. Die zueinander spiegelbildlich verlaufenden Kurven $f(\Omega_1)$ und $f(\Omega_2)$ im Diagramm gemäß Fig. 2 gelten dabei für die bei den Gleichungen (3) und (4) jeweils angegebenen Beziehungen der beiden Drehzahlen. Der Beginn des in Fig. 2 ebenfalls dargestellten Arbeitsbereiches bzw. annähernd linearen Teils der jeweiligen Kurven ist abhängig von der Fläche des Leerwickels ($K_B$) und endet bei dem Wert "1" auf der Abszisse, wenn beide Wickel gleich groß sind.

Für den Bandanfang ($t_S = 0$) ist die Bandkonstante $K_B$ durch eine Messung der Tachofrequenzen $\omega_1$ und $\omega_2$ und Verwendung der nachfolgenden Gleichung (vereinfachte Gleichung (3))

$$K_B = \frac{1}{\Omega_1^2 - 1} \qquad (5)$$

berechenbar; analog dazu für das Bandende ($t_S$ = $t_{SG}$) steht im Nenner dann $\Omega_2$.

Die ebenfalls durch die Recheneinheit 1 erfolgende Einstellung der Bandzüge des Informationsträgers bei Wiedergabe wird durch je eine Geradengleichung für jeden Motor M1 bzw. M2 gemäß folgender mathematischer Beziehungen vorgenommen:

$y_{M1} = C_1 \cdot t_S + b_1$

(6) $y_{M2} = C_2 \cdot t_S + b_2$,

wobei die Konstanten $C_1$, $C_2$, $b_1$, $b_2$ in der Recheneinheit 1 gespeichert (Festwert-Tabelle) und darin verarbeitet werden.

Der Umspulregelalgorithmus wird durch einen P-Regler verwirklicht. Die Recheneinheit 1 regelt dabei auf konstante Bandgeschwindigkeit und annähernd konstanten Bandzug. Die Ansteuerung der Motoren M1 bzw. M2 erfolgt wieder wie bei der Wiedergabe. Beim Umspulen ebenso wie bei der Wiedergabe erfolgt laufend die Berechnung und Anzeige der (Bandzähler) Werte.

Mit dem Gegenstand der Erfindung läßt sich einfach und billig und dennoch zuverlässig die abgelaufene Spielzeit bzw. Bandlänge und/oder die Restlaufzeit (durch einfache Umordnung und Auswertung der obengenannten Gleichungen) von Kassetten oder Spulen bandförmiger Informationsträger in Videomagnetband - Aufzeichnungs- und Wiedergabegeräten ermitteln.

**Patentansprüche**

1. Verfahren zur Ermittlung und Anzeige der abgelaufenen Spielzeit bzw. Bandlänge und/oder der Restlaufzeit von Kassetten oder Spulen bandförmiger Infarmatiansträger in Videomagnetband-Aufzeichnungs- und- Wiedergabegeräten, bei dem die Drehzahlen bzw. die davan abgeleiteten Impulse zweier Antriebswellen in Beziehung gesetzt und daraus durch Rechenoperationen in einer Recheneinheit (1) die abgelaufene Spielzeit ($t_S$) und/oder die Restlaufzeit ($t_{SG} - t_S$) ermittelt und in einer Anzeigeeinheit (2) angezeigt wird, wobei während eines kurzen Meßlaufs mit beliebiger Bandgeschwindigkeit die Werte ermittelt und die in der Recheneinheit (1) gespeicherten spezifischen Daten der Spule bzw. Kassette, insbesondere die gespeicherte Gesamtspielzeit ($t_{SG}$) von der Recheneinheit (1) ausgewertet werden, gekennzeichnet durch die Kombination der folgenden Merkmale:

- nach Einlegen der Spule bzw. Kassette werden deren spezifische Daten über eine Abtasteinrüchtung abgetastet es wird ein Meßlauf zur Ermittlung der Bandstette durchgeführt, wobei die gespeicherten spezifischen und die gemessenen Daten der Spule bzw. Kassette nach Maßgabe folgender Relationen

$$\frac{t_S}{t_{SG}} = \frac{1 + K_B (1 - \Omega_1^2)}{1 + \Omega_1^2}$$

für $n_1 < n_2$ mit $\Omega_1 = \frac{n_1}{n_2}$ und

$$\frac{t_S}{t_{SG}} = 1 - \frac{1 + K_B (1 - \Omega_2^2)}{1 + \Omega_2^2}$$

für $n_1 > n_2$ mit $\Omega_2 = \frac{n_2}{n_1} = \frac{1}{\Omega_1}$ ,

worin $n_1$ = Drehzahl der Aufwickelspule und $n_2$ = Drehzahl der Vorratsspule und $t_S$ die abgelaufene Spielzeit, $t_{SG}$ die Gesamtspielzeit und K die Bandkonstante (Bandwickelinformation) ist, die sich ergibt aus:

$$K_B = \frac{\pi \cdot d_0^2}{4 \cdot d_B \cdot l_B} \quad ,$$

worin $d_0$ den Durchmesser des Leerwickels, $d_B$ die Banddicke und $l_B$ die Bandlänge bedeutet, nacheinander in der Recheneinheit verarbeitet und schließlich als abgelaufene Spielzeit ($t_S$) und/oder Restlaufzeit ($t_{SG} - t_S$) in der Anzeigeeinheit (2) angezeigt werden,

- die Ausgangssignale der Recheneinheit (1) werden anschließend zur Ansteuerung der Motoren (M1; M2) für die Einstellung der Bandzüge in pulsdauermodulierte Signale umgewandelt, integriert und anschließend spannungs-strom-umgesetzt, wobei die Ausgangssignale durch je eine Geradengleichung für jeden Motor (M1; M2) gemäß folgender mathematischer Beziehung gebildet werden:

$y_{M1} = C_1 \cdot t_S + b_1$

$Y_{M2} = C_2 \cdot t_S + b_2$,

wobei die Motorregelkonstanten $C_1$, $C_2$, $b_1$, $b_2$ in der Recheneinheit (1) gespeichert sind.

2. Verfahren nach Anspruch 1, dadurch gekennzeichnet, daß bei abweichender Spielgeschwindigkeit die Recheneinheit (1) ein Steuersignal (Führungsgröße) an den Regelkreis (8) der Abtasteinrichtung zu deren Nachregelung abgibt.

## Claims

1. Process for determining and displaying the elapsed playing time or tape length and/or the remaining playing time of cassettes or reel-to-reel tape-like information media in video magnetic tape recording and playback equipment, in which the speeds or the pulses derived therefrom of two drive shafts are set in relation and, from this, the elapsed playing time ($t_P$) and/or the remaining playing time ($t_{P0} - t_p$) is determined by arithmetic operations in a computer unit (1) and displayed in a display unit (2), the values being determined during a brief measuring operation at any desired tape speed and the specific data, for the reel or cassette, stored in the computer unit (1), in particular the stored overall playing time ($t_{P0}$) being evaluated by the computer unit (1), characterised by the combination of the following features:

- after loading of the reel or cassette, its specific data are scanned via a scanning device

- a measuring operation for determining the tape position is carried out, the stored specific data and the measured data for the reel or cassette being processed successively in the computer unit in accordance with the following regulations

$$\frac{t_P}{t_{P0}} = \frac{1 + c_T(1 - \Omega_1^2)}{1 + \Omega_1^2}$$

for $n_1 < n_2$ with $\Omega_1 = \frac{n_1}{n_2}$

and

$$\frac{t_P}{t_{P0}} = 1 - \frac{1 + c_T(1 - \Omega_2^2)}{1 + \Omega_2^2}$$

for $n_1 > n_2$ with $\Omega_2 = \frac{n_2}{n_1} = \frac{1}{\Omega_1}$ ,

where $n_1$ = speed of the take-up reel and $n_2$ = speed of the supply reel and $t_p$ is the elapsed playing time, $t_{P0}$ is the overall playing time and $C_T$ is the tape constant (tape winding information), which is obtained from:

$$c_T = \frac{\pi \cdot d_0^2}{4 \cdot t_T \cdot 1_T} ,$$

where $d_O$ is the diameter of the unrecorded wound tape, $t_T$ is the tape thickness and $1_T$ is the tape length, and finally being displayed in the display unit (2) as elapsed playing time ($t_p$ and/or remaining playing time ($t_{P0} - t_p$),

- for driving the motors (M1; M2) for the adjustment of tape tensions, the output signals of the computer unit (1) are then converted into pulse-duration modulated signals, integrated and subsequently converted from voltage to current, the output signals being formed in each case by a linear equation for each motor (M1; M2) according to the following mathematical relationship:

$y_{M1} = C_1 . t_p + b_1$
$y_{M2} = C_2 . t_p + b_2$

where the motor control constants $C_1$, $C_2$, $b_1$, $b_2$ are stored in the computer unit (1).

2. Process according to Claim 1, characterised in that whenever there is a deviation in the playing speed the computer unit (1) emits a control signal (reference input) to the control loop (8) of the scanning device for its follow-up control.

## Revendications

Procédé pour calculer et afficher le temps de défilement passé ou la longueur de bande passée et/ou le temps de défilement restant à courir, de cassettes et bobines de supports d'informations en forme de bande dans des appareils d'enregistrement et de reproduction vidéo à bande magnétique, dans lequel les vitesses de rotation de deux arbres d'entraînement, ou les impulsions qui sont dérivées de ces vitesses sont mises en relation et le temps de défilement passé ($t_s$) et/ou le temps de défilement restant ($t_{SG} - t_s$) sont calculés à partir de ces vitesses ou impulsions, par des opérations de calcul exécutées dans une unité de calcul (1), et affichés dans une unité d'affichage, opération dans laquelle, pendant un court passage de mesure exécuté avec une vitesse de bande quelconque les valeurs sont mesurées et les données particulières de la bobine ou de la cassette qui sont mémorisées dans l'unité de calcul (1), en particulier, le temps de défilement total mémorisé ($t_{SG}$) sont exploitées par l'unité de calcul, caractérisé par la combinaison des particularités suivantes:

- après la mise en place de la bobine ou de la cassette, les données spécifiques de cette bobine ou cassette sont captées par un dispositif capteur et il s'effectue un passage de mesure pour le calcul de la position de la bande, les données particulières mémorisées et mesurées de la bobine ou de la cassette étant traitées les unes après les autres dans l'unité de calcul d'après les relations suivantes:

$$\frac{t_S}{t_{SG}} = \frac{1 + K_B \, (1 - \Omega_1^2)}{1 + \Omega_1^2}$$

pour $n_1 < n_2$ avec $\Omega_1 = \dfrac{n_1}{n_2}$ et

$$\frac{t_S}{t_{SG}} = 1 - \frac{1 + K_B(1 - \Omega_2^2)}{1 + \Omega_2^2}$$

pour $n_1 > n_2$ mit $\Omega_2 = \dfrac{n2}{n1} = \dfrac{1}{\Omega_1}$ ,

où $n_1$ = vitesse de rotation de la bobine réceptrice
et $n_2$ = vitesse de rotation de la bobine débitrice et $t_S$ représente le temps de défilement passé, $t_{SG}$ le temps de défilement total et $K_B$ la constante de bande (information d'enroulement de bande), constante qui est donnée par: $K_B$ =

$$\frac{\pi \cdot d_O^2}{4 \cdot d_B \cdot 1_B} ,$$

où $d_O$ désigne le diamètre de l'enroulement, vide, $d_B$ l'épaisseur de la bande et $1_B$ la longueur de la bande, et finalement affichées dans l'unité d'affichage (2), en qualité de temps de défilement passé ($t_S$) et/ou le temps de défilement restant à courir ($t_{SG}$ - $t_S$).
- les signaux de sortie de l'unité se calcul (1) sont ensuite transformés en signaux modulés en durée d'impulsion pour le pilotage des moteurs ($M_1$; $M_2$) pour le réglage des tractions de la bande et, ensuite, soumis à une conversion tension-intensité, les signaux de sortie étant formés par chacun une équation linéaire pour chaque moteur ($M_1$; $M_2$) conformément à la relation mathématique suivante:
$Y_{M1} = C_1.t_S + b_1$
$Y_{M2} = C_2.t_S + b_2$,

les constantes de régulation des moteurs $C_1$, $C_2$, $b_1$, $b_2$ étant mémorisées dans l'unité de calcul (1).

2. Procédé selon la revendication 1, caractérisé en ce que, en présence d'un écart de vitesse de défilement, l'unité de calcul (1) transmet un signal de commande (grandeur de guidage) au circuit de régulation (8) du dispositif palpeur, pour la correction de ce dispositif.

FIG.1

FIG. 2